# EUROPEAN PATENT SPECIFICATION

(11) **EP 3 883 713 B1**
(45) Date of publication and mention of the grant of the patent: **03.07.2024**
(21) Application number: 19759439.3
(22) Date of filing: 05.08.2019
(51) Int. Cl.: B22F 9/22, B22F 1/00, B22F 9/04, C01G 49/02, C22C 33/02, B22F 9/00, B22F 1/065

(54) **A METHOD OF PRODUCING SPHERICAL IRON POWDER**
VERFAHREN ZUR HERSTELLUNG VON KUGELFÖRMIGEM EISENPULVER
PROCÉDÉ DE PRODUCTION DE POUDRE DE FER SPHÉRIQUE

(30) Priority: 23.11.2018 IN 201841044234
(43) Date of publication of application: 29.09.2021
(73) Proprietor: Tata Steel Limited, Jamshedpur, Jharkhand 831001 (IN); The Royal Institution for the Advancement of Learning / McGill University, West Montreal, Québec H3A 0G4 (CA)
(72) Inventor: DWARAPUDI, Srinivas, Jamshedpur, Jharkhand 831 001 (IN); RANJAN SINHA, Gourav, Jamshedpur, Jharkhand 831 001 (IN); KAMESWARA SRIKAR, Sista, Jamshedpur, Jharkhand 831 001 (IN); KUMAR, Deepak, Jamshedpur, Jharkhand 831 001 (IN); SUDAN, Munish, Jamshedpur, Jharkhand 831 001 (IN); NARAYAN VAIDYA, Manish, Montreal, Québec H3A 3G4 (CA); BERGTHORSON, Jeffrey, Montreal-West, Québec H4X 1X8 (CA); JULIEN, Philippe, Montreal, Québec H2B 2V7 (CA)
(74) Representative: Kador & Partner Part mbB
(86) International application number: PCT/IB2019/056636
(87) International publication number: WO 2020/104866

(56) References cited:
- DE-B4-102008 009 133
- JP-A- H02 223 962
- JP-A- 2002 105 501
- US-A1- 2003 110 889
- Gunnar Walther ET AL: "Manufacturing of Fine Spherical Iron Powder and the Influence of the Powder Morphology on the Sintering Behaviour Fundamentals of Sintering of Metallic Systems View project Dispersion Strengthened Materials View project World PM2016 - Powder Characterisation II Manufacturing of Fine Spherical Iron P", , 1 October 2016 (2016-10-01), XP055632590, Retrieved from the Internet: URL:https://www.researchgate.net/publicati on/325343176_Manufacturing_of_Fine_Spheric al_Iron_Powder_and_the_Influence_of_the_Po wder_Morphology_on_the_Sintering_Behaviour [retrieved on 2019-10-16]
- Omar Benchiheub ET AL: "Preparation of iron Powders by Reduction of Rolling", International Journal of Scientific & Engineering Research ArticleinInternational Journal of Scientific and Engineering Research, 5 May 2013 (2013-05-05), pages 1457-1472, XP055632564, Retrieved from the Internet: URL:https://www.researchgate.net/publicati on/269463295_Preparation_of_iron_Powders_b y_Reduction_of_Rolling_Mill_Scale_Internat ional_Journal_of_Scientific_Engineering_Re search_Volume_4_Issue_5_May-20131457-1472 [retrieved on 2019-10-15]

## Description

### TECHNICAL FIELD

The present invention is in the field of metallurgy, more particularly towards spherical iron powder production. The present disclosure provides a simple, economical, non-toxic and efficient method of producing spherical iron powder from iron oxide.

### BACKGROUND OF THE DISCLOSURE

Aggregates of iron with a size range of about 20-200 µm are termed as iron powders. Metal powder manufacturing techniques are broadly classified into three methods: chemical (reduction/decomposition), physical (atomization/electrolytic) and mechanical (comminution). Iron powders on a large scale are usually manufactured by reduction (solid/gas) and atomization (air/water/gas) techniques. Reduction includes reducing iron oxide to iron powder using solid or gaseous reducing agents. On the other hand, in the atomization technique, liquid iron melts are atomized by air or water or gas and further processed to get powdered form of iron. The selection of the method of production is always dependent on the type of application and desired property of the iron powder to be produced.

Iron powder prepared through reduction techniques and water atomization techniques are irregular in shape. Further, though iron powder produced via. inert gas atomization is spherical in shape, said inert gas atomization is very expensive and includes a major limitation on the powder size that can be produced through atomization. For instance, fine powders cannot be produced through this route. Additionally, carbonyl processes can produce spherical iron powders with fine particle size ranges, but said processes suffer from several disadvantages such as very high toxicity due to hazardous gases and the presence of unwanted impurities such as carbon and nitrogen in the iron powder product.

Gunnar Walther ET AL: "Manufacturing of Fine Spherical Iron Powder and the Influence of the Powder Morphology on the Sintering Behaviour; WorldPM 2016", discloses a method of manufacturing spherical iron powder based on the hydrogen reduction of hematite.

Therefore, there is an immense need to develop a simple, cost-effective and non-toxic route/method to produce pure carbon-free spherical iron powders in the finer particle size ranges.

### STATEMENT OF THE DISCLOSURE

The present invention relates to a method of preparing spherical iron powder according to claim 1.

The present disclosure further relates to spherical iron oxide, not forming part of the invention, obtained by the method described above wherein said spherical iron oxide comprises a dense spherical morphology of iron oxide particles having an average particle diameter between 10 µm to 200 µm and an apparent density between 2.5 g/cc to 3 g/cc.

The present disclosure also provides spherical iron powder, not forming part of the invention, obtained by the method described above wherein said spherical iron powder has at least 98% metallic iron [Fe(m)] and comprises a dense spherical morphology of iron particles with an average particle diameter between 5 µm and 100 µm and an apparent density of 2.1 g/cc to 2.6 g/cc.

### BRIEF DESCRIPTION OF THE ACCOMPANYING FIGURES

**Figure 1** depicts X-ray powder diffraction (XRD) analysis of spray roasted iron oxide powder (raw material) employed in the present method of producing spherical iron oxide.
**Figure 2** depicts XRD analysis of irregular iron powder obtained by reduction of spray roasted iron oxide during the present method of producing spherical iron oxide.
**Figure 3** depicts microstructure of irregular iron powder obtained by reduction of spray roasted iron oxide during the present method of producing spherical iron oxide.
**Figure 4** depicts XRD analysis of spherical iron oxide powder obtained after burning of irregular iron powder in presence of air.
**Figure 5** depicts microstructure of spherical iron oxide powder obtained after burning of irregular iron powder in presence of air.
**Figure 6** depicts XRD analysis of spherical iron powder obtained by reacting spherical iron oxide with hydrogen rich gas.
**Figure 7** depicts microstructure of spherical iron powder obtained by reacting spherical iron oxide with hydrogen rich gas.

### DETAILED DESCRIPTION OF THE DISCLOSURE

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity. The use of the expression "at least" or "at least one" suggests the use of one or more elements or ingredients or quantities, as the use may be in the embodiment of the disclosure to achieve one or more of the desired objects or results. Throughout this specification, the word "comprise", or variations such as "comprises" or "comprising" or "containing" or "has" or "having" wherever used, will be understood to imply the inclusion of a stated element, integer or step, or group of elements, integers or steps, but not the exclusion of any other element, integer or step, or group of elements, integers or steps. As used herein, the phrases `spherical iron' or `spherical iron powder' refer to high purity iron particles comprising a dense spherical morphology and a homogenous particle size along with a porous structure across the surface of iron powder, and having an average particle diameter between 5 µm and 100 µm with an apparent density of not more than 2.6 g/cc (gram per cubic centimeter).

As used herein, the phrases `spherical iron oxide' or `spherical iron oxide powder' refer to iron oxide particles comprising dense spherical morphology and a homogenous particle size, and having an average particle diameter between 10 µm and 200 µm with an apparent density of not more than 3 g/cc.

As used herein, the phrases `irregular iron' or `irregular iron powder' refer to iron particles characterized by irregular shape and inhomogeneity in particle size, and having an apparent density of 0.8-2.4 g/cc.

As used herein, the phrases `irregular iron oxide' or `irregular iron oxide powder' or `iron oxide powder (raw material)' or `iron oxide (raw material)' refer to iron oxide particles characterized by irregular shape and inhomogeneity in particle size.

The present invention is in relation to spherical iron powder production. An object of the present disclosure is to develop a simple, economical and non-toxic method of producing spherical iron powders in the finer particle size ranges.

Accordingly, the present invention provides a method of producing spherical iron powder, comprising the steps defined in claim 1.

In an embodiment, the iron oxide (raw material) employed for reduction is spray roasted iron oxide powder which is an oxide form of iron, and said spray roasted iron oxide powder is obtained from spray roasting process during acid regeneration process of spent pickle liquor.

In an exemplary embodiment of the present invention, the spray roasted iron oxide powder comprises Fe(t) at a wt% of about 69.09, FeO at a wt% of about 0.26, SiO₂ at a wt% of about 0.08, CaO at a wt% of about 0.01, MgO at a wt% of about 0.027, MnO at a wt% of about 0.38, Al₂O₃ at a wt% of about 0.16, S at a wt% of about 0.01, C at a wt% of about 0.123. Said spray roasted iron oxide powder further comprises at least one or more additional elements/components selected from Cr, Ti, Cu and P at various wt% to make up the final composition to 100 wt%.

In an embodiment of the present method, the carbon monoxide rich gas is selected from a group comprising coke oven gas, blast furnace gas, steel making converter gas, pure carbon monoxide and combinations thereof.

In another embodiment of the present method, the hydrogen rich gas is selected from a group comprising cracked ammonia, hydrogen separated from coke oven gas, pure hydrogen and combinations thereof.

In yet another embodiment of the present method, the solid carbonaceous reducing agent is selected from a group comprising carbon black, anthracite coal, coal tar pitch, coke breeze and combinations thereof.

In still another embodiment of the present method, the oxygen rich gas is selected from a group comprising pure oxygen, air, a mixture of oxygen and fuel gas, and combinations thereof. In an embodiment, the oxygen and fuel gas mixture is selected from a group comprising oxygen and acetylene, oxygen and propane, oxygen and butene, and combinations thereof.

According to the invention, the reduction of the iron oxide (raw material) to obtain irregular iron powder is carried out in a reduction furnace at a temperature of about 500°C to 1200°C and for a time-period of about 60 minutes to 360 minutes.

In exemplary embodiments of the present method, the reduction of iron oxide to irregular iron powder is performed at a temperature of about 500°C, about 600°C, about 700°C, about 800°C, about 900°C, about 1000°C, about 1100°C or about 1200°C. In preferred embodiments, the reduction of iron oxide to irregular iron powder is performed at a temperature of about 700°C, about 800°C, about 900°C or about 1000°C.

In another exemplary embodiment of the present method, the reduction of iron oxide to irregular iron powder is carried out for a time-period of about 60 minutes, about 80 minutes, about 100 minutes, about 120 minutes, about 140 minutes, about 160 minutes, about 180 minutes, about 200 minutes, about 220 minutes, about 240 minutes, about 260 minutes, about 280 minutes, about 300 minutes, about 320 minutes, about 340 minutes or about 360 minutes. In preferred embodiments, the reduction of iron oxide to irregular iron powder is carried out for a time-period of about 60 minutes, about 180 minutes, about 240 minutes, about 300 minutes or about 360 minutes.

In an embodiment of the present method, the irregular iron powder obtained during the present method has an apparent density between 0.8 g/cc to 2.4 g/cc. In exemplary embodiments, the irregular iron powder possesses an apparent density of about 0.8 g/cc, about 0.9 g/cc, about 1 g/cc, about 1.6 g/cc, about 1.7 g/cc, about 1.8 g/cc, or about 2.2 g/cc.

In an embodiment of the present method, the burning of the irregular iron powder in presence of oxygen rich gas to obtain spherical iron oxide is carried out using a powder dispensing unit and gas-powder burning torch. In an exemplary embodiment, the burning of the irregular iron powder generates exothermic heat which melts and converts the irregular iron particles of the irregular iron powder into the spherical iron oxide particles due to surface tension.

According to the invention, the reduction of the spherical iron oxide to obtain spherical iron powder is carried out in a reduction furnace at a temperature of about 500°C to 1200°C and for a time-period of about 60 minutes to 300 minutes.

In exemplary embodiments of the present method, the reduction of spherical iron oxide to spherical iron powder is performed at a temperature of about 500°C, about 600°C, about 700°C, about 800°C, about 900°C, about 1000°C, about 1100°C or about 1200°C. In a preferred embodiment, the reduction of spherical iron oxide to spherical iron powder is performed at a temperature of about 500°C to 900°C. In another preferred embodiment, the reduction of spherical iron oxide to spherical iron powder is performed at a temperature of about 900°C to 1100°C.

In another exemplary embodiment of the present method, the reduction of spherical iron oxide to spherical iron powder is carried out for a time-period of about 60 minutes, about 80 minutes, about 100 minutes, about 120 minutes, about 140 minutes, about 160 minutes, about 180 minutes, about 200 minutes, about 220 minutes or about 240 minutes.

According to the invention, the present method further involves steps of cooling, crushing, pulverizing and screening to obtain the irregular iron powder or the spherical iron powder.

In another embodiment of the present method, the method steps/processes including: (i) burning of the irregular iron powder in presence of oxygen rich gas to obtain spherical iron oxide, and (ii) further reduction of said spherical iron oxide in presence of a carbon monoxide rich gas and/or a hydrogen rich gas, are critical to obtain the final highly pure spherical iron powder with fine particle size range.

According to the invention, the method for preparing spherical iron powder from iron oxide comprises:
a) heating the iron oxide (raw material) in a reduction furnace to a temperature of about 500°C to 1200°C and reducing the iron oxide in presence of a carbon monoxide rich gas or a hydrogen rich gas or a solid carbonaceous reducing agent or any combination thereof, for a time-period of about 60 minutes to 360 minutes to form a loosely sintered iron powder cake,
b) cooling the loosely sintered iron powder cake in the furnace to room temperature under inert atmosphere, followed by crushing, pulverizing and screening said iron powder cake to obtain the irregular iron powder,
c) burning the irregular iron powder in the presence of oxygen rich gas to generate exothermic heat to melt and convert the irregular iron particles of the irregular iron powder into the spherical iron oxide powder due to surface tension,
d) heating the spherical iron oxide powder in a reduction furnace to a temperature of about 500°C to 1200°C and reducing the spherical iron oxide powder in presence of a carbon monoxide rich gas or a hydrogen rich gas or a combination thereof, for a time-period of about 60 minutes to 300 minutes to form loosely sintered spherical iron powder cake, and
e) cooling the loosely sintered spherical iron powder cake in the furnace to room temperature under inert atmosphere, followed by crushing, pulverizing and screening said spherical iron powder cake to obtain the spherical iron powder.

In an example of the above described method, the step of cooling under inert atmosphere is performed by passing nitrogen gas or argon gas, preferably nitrogen gas.

In another exemplary embodiment of the present method, the method for preparing spherical iron powder from iron oxide comprises the following steps:
a) heating the iron oxide (irregular spray roasted iron oxide powder) in a reduction furnace to the temperature of about 500°C to 1200°C,
b) reduction (removal of oxygen) of the iron oxide in presence of reducing agent selected from:
   (i) carbon monoxide rich gas such as coke oven gas or blast furnace gas or steel making converter gas,
      or
   (ii) hydrogen rich gas such as cracked ammonia or pure hydrogen or converted coke oven gas (i.e. hydrogen separated from coke oven gas),
      or
   (iii) carbonaceous solid reducing agent such as carbon black or coal tar pitch or anthracite coal or coke breeze,
   at a temperature of about 500°C to 1200°C and for about 60 minutes to 360 minutes to reduce the iron oxide to form a loosely sintered iron powder cake of apparent density 0.8-2.4 g/cc,
c) cooling the loosely sintered iron powder cake in the furnace to room temperature by passing nitrogen gas,
d) crushing, pulverizing and screening the iron powder cake to obtain irregular iron powder,
e) burning the irregular iron powder using a powder dispensing unit and gaseous powder burning torch carried by oxygen rich gas (pure oxygen, or a mixture of oxygen and fuel gas) to generate exothermic heat to melt and convert the irregular iron particles into spherical iron oxide particles due to the surface tension, wherein the obtained spherical iron oxide particles have an apparent density of not more than 3 g/cc and an average particle diameter between 10 µm and 200 µm, preferably between 40 µm and 100 µm,
f) heating the spherical iron oxide in a reduction furnace to a temperature of about 500°C to 1200°C,
g) reduction (removal of oxygen) of the spherical iron oxide in presence of a reducing agent viz. hydrogen rich gas such as cracked ammonia or pure hydrogen or converted coke oven gas (i.e. hydrogen separated from coke oven gas), at a temperature of about 500°C to 1200°C and for about 60 minutes to 300 minutes to reduce the spherical iron oxide to form loosely sintered spherical iron powder cake,
h) cooling the loosely sintered spherical iron powder cake in the furnace to room temperature by passing nitrogen gas, and
i) crushing, pulverizing and screening the spherical iron powder cake to produce spherical iron powder with a chemical purity of at least 98% metallic iron and having an apparent density of not more than 2.6 g/cc and an average particle diameter between 5 µm and 100 µm, preferably between 30 µm and 60 µm.

The present disclosure further relates to products, not forming part of the invention, obtained during the spherical iron powder production method described herein, including spherical iron oxide and spherical iron powder.

The present disclosure thus relates to spherical iron oxide powder, not forming part of the invention, obtained by the method described herein, wherein said spherical iron oxide comprises a dense spherical morphology of iron oxide particles having an average particle diameter between 10 µm to 200 µm and an apparent density of not more than 3 g/cc. In a preferred embodiment, the spherical iron oxide possesses an average particle diameter between 40 µm to 100 µm. In another example, not forming part of the invention, the spherical iron oxide possesses an apparent density between 2.5 g/cc to 3 g/cc. For example, the spherical iron oxide possesses an apparent density of about 2.5 g/cc, or about 2.6 g/cc, or about 2.8 g/cc.

In an embodiment of the present method, the spherical iron oxide obtained by the present method comprises Fe(t) at a wt% of about 70.3 to 71.7, FeO at a wt% of about 18.2 to 23.99, Fe(m) at a wt% of about 1.3 to 1.8, CaO at a wt% of about 0.01 to 0.014, SiO₂ at a wt% of about 0.01 to 0.9, MgO at a wt% of about 0.026 to 0.04, MnO at a wt% of about 0.28 to 0.415, Al₂O₃ at a wt% of about 0.2 to 0.54, C at a wt% of about 0.03 to 0.034, and S at a wt% of about 0.002 to 0.004. Said spherical iron oxide further comprises at least one or more additional elements/components selected from Cr, Ti, Cu and P at various wt% to make up the final composition to 100 wt%.

In an exemplary embodiment of the present method, the spherical iron oxide obtained by the present method comprises Fe(t) at a wt% of about 71.7, FeO at a wt% of about 23.99, Fe(m) at a wt% of about 1.8, CaO at a wt% of about 0.01, SiO₂ at a wt% of about 0.09, MgO at a wt% of about 0.026, MnO at a wt% of about 0.36, Al₂O₃ at a wt% of about 0.204, C at a wt% of about 0.033, and S at a wt% of about 0.002.

The present disclosure further provides spherical iron powder, not forming part of the invention, obtained by the method described herein, wherein said spherical iron powder has high chemical purity with at least 98% metallic iron and comprises a dense spherical morphology of iron particles with an average particle diameter between 5 µm and 100 µm and an apparent density of not more than 2.6 g/cc. In a preferred embodiment, the spherical iron powder possesses an average particle diameter between 30 µm to 60 µm. In another example not forming part of the invention, the spherical iron powder possesses an apparent density between 2.1 g/cc to 2.6 g/cc. For example, the spherical iron powder possesses an apparent density of about 2.3 g/cc, or about 2.25 g/cc, or about 2.1 g/cc.

In an embodiment of the present method, the spherical iron powder obtained by the present method has a purity or metallic iron content of about 98% to 98.8 %.

In another embodiment of the present method, the spherical iron powder obtained by the present method comprises Fe(t) at a wt% of about 98.04 to 98.9, FeO at a wt% of about 0.04 to 0.32, Fe(m) at a wt% of about 98 to 98.8, CaO at a wt% of about 0.039 to 0.052, SiO₂ at a wt% of about 0.078 to 0.97, MgO at a wt% of about 0.001 to 0.042, MnO at a wt% of about 0.3 to 0.48, Al₂O₃ at a wt% of about 0.217 to 0.56, C at a wt% of about 0.02 to 0.03, and S at a wt% of about 0.001 to 0.005. Said spherical iron powder further comprises at least one or more additional elements/components selected from Cr, Ti, Cu and P at various wt% to make up the final composition to 100 wt%.

In an exemplary embodiment of the present method, the spherical iron powder obtained by the present method comprises Fe(t) at a wt% of about 98.8, FeO at a wt% of about 0.13, Fe(m) at a wt% of about 98.7, CaO at a wt% of about 0.048, SiO₂ at a wt% of about 0.078, MgO at a wt% of about 0.001, MnO at a wt% of about 0.48, Al₂O₃ at a wt% of about 0.32, C at a wt% of about 0.02, and S at a wt% of about 0.001.

### EXAMPLES

### EXAMPLE 1: Production of spherical iron powder by employing irregular spray roasted iron oxide powder as a raw material and coke oven gas as a reducing agent

This example demonstrates the reduction of irregular spray roasted iron oxide powder using coke oven gas (carbon monoxide rich gas) as reducing agent, and burning the resultant irregular iron powder to produce spherical iron oxide powder which is further reduced to obtain spherical iron powder.

The chemistry/composition of the raw material (spray roasted iron oxide powder) used in the present experiment is provided in Table 1 below.

**Table 1: Chemical composition of spray roasted iron oxide raw material used for reduction**

| Composition (wt %) | Fe(total) [Fe(t)] | FeO | CaO | SiO₂ | S | MgO | MnO | Al₂O₃ | C |
|---|---|---|---|---|---|---|---|---|---|
| Spray Roasted Iron Oxide | 69.09 | 0.26 | 0.01 | 0.08 | 0.01 | 0.027 | 0.38 | 0.16 | 0.123 |

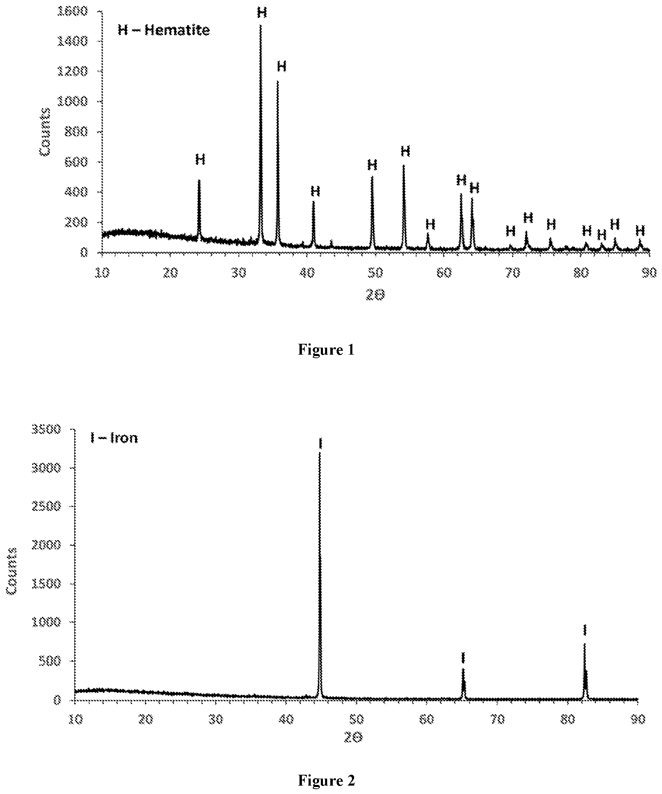

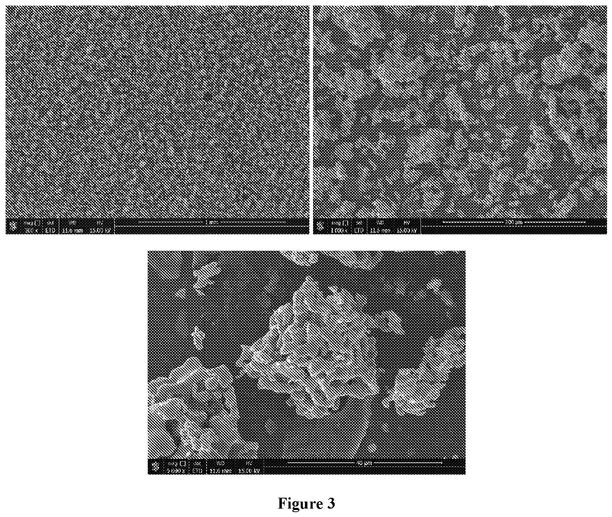

100 g of iron oxide obtained from spray roasting of pickle liquor was placed in the reduction chamber of furnace and heated at a rate of about 10 °C/min, to reach to a temperature of about 900°C. When the desired temperature was reached, coke oven gas was introduced into the furnace with the flow rate of about 2 litres per minute for about 240 minutes. The reduction lasted for about 240 minutes at a temperature of 900°C resulting in the formation of loosely sintered iron powder cake. Thereafter, to eliminate the pyrophoric nature of the iron powder, the loosely sintered iron powder cake was then subsequently allowed to cool in an inert environment by passing nitrogen gas to further lower the oxygen content. The nitrogen cooling was carried out at a flow rate of about 0.5 liters per minute till the temperature of the furnace reached to atmospheric temperature, thus yielding about 70 grams of iron powder cake. The cake was then crushed and pulverized into desired size to produce irregular iron powder having apparent density of 1 g/cm³. The XRD analysis of the raw material (irregular spray roasted iron oxide powder) and the irregular iron powder obtained after reduction are shown in Figure 1 and Figure 2, respectively. Figure 3 shows the microstructure of the irregular iron powder after reducing the spray roasted iron oxide powder.

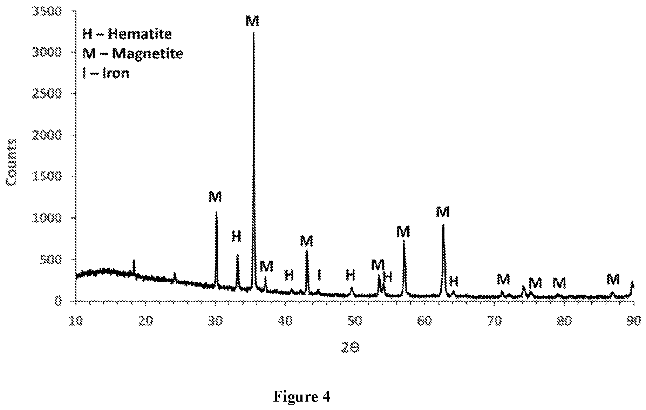

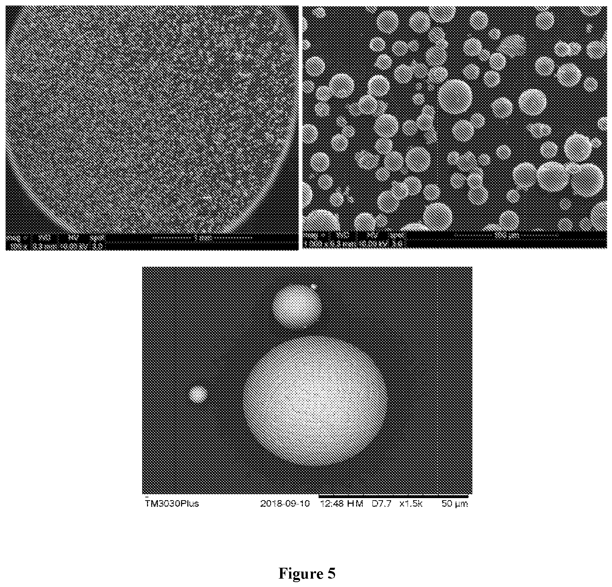

The obtained irregular iron powder is then subjected to combustion (burned in the presence of air) to generate exothermic heat to melt and convert the irregular iron particles into spherical iron oxide particles due to the surface tension. The resultant iron oxide obtained after burning is spherical in shape. The XRD analysis and microstructure of the spherical iron oxide are shown in Figure 4 and Figure 5, respectively, and the chemistry/composition is shown in Table 2. The average particle diameter of spherical iron oxide is between 10 and 200 µm with an apparent density of not more than 3 g/cc.

**Table 2: Chemical composition of spherical iron oxide produced after combustion**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron Oxide | 71.7 | 23.99 | 1.8 | 0.01 | 0.09 | 0.033 | 0.002 | 0.026 | 0.36 | 0.204 |

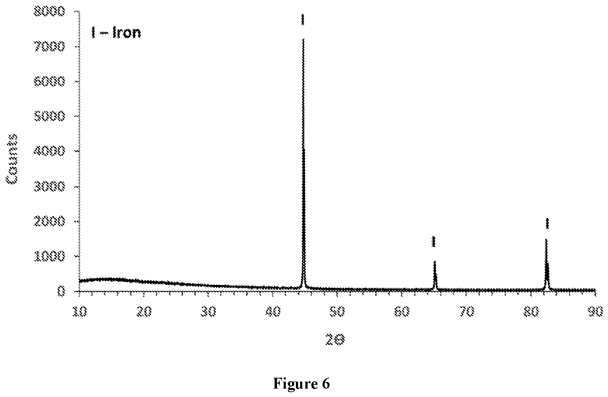

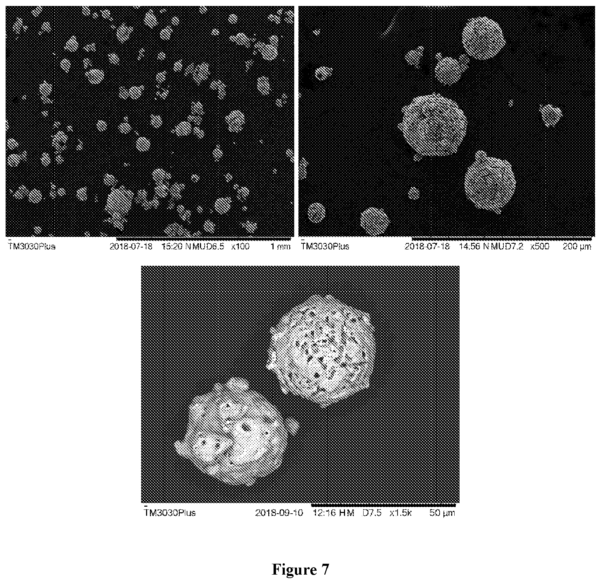

The spherical iron oxide is then reduced in hydrogen rich gas (pure hydrogen) in a reduction furnace, to the temperature of about 500°C to 900°C for about 60 to 240 minutes duration. The resultant loosely sintered spherical iron powder cake is cooled in the furnace to room temperature by passing nitrogen gas. The sintered spherical iron powder cake is then crushed, pulverized and screened to produce spherical iron powder. Figure 6 and Figure 7 shows the XRD analysis and microstructure of spherical iron powder, respectively. Further, the chemistry/composition of the spherical iron powder product is provided in Table 3.

**Table 3: Chemical composition of spherical iron powder produced after reduction of spherical iron oxide**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron powder | 98.8 | 0.32 | 98.5 | 0.052 | 0.12 | 0.028 | 0.005 | 0.042 | 0.386 | 0.259 |

As observed from Table 3, the spherical iron powder contained at least 98.5 wt% metallic iron. The spherical iron powder had an average particle diameter between 5 and 100 µm with an apparent density of 2.6 g/cc. Said results indicate the achievement of high purity spherical iron powder with finer particle size range by employing the present method.

### EXAMPLE 2: Production of spherical iron powder by employing irregular spray roasted iron oxide powder as a raw material and cracked ammonia gas as a reducing agent

Synthesis of spherical iron powder was carried out similar to the procedure described in Example 1. Here, the irregular spray roasted iron oxide powder having the composition as defined in Example 1 was reduced using cracked ammonia gas (hydrogen rich gas) at about 800°C for a reduction time of about 180 minutes to produce irregular iron powder with an apparent density of 0.9 g/cm³. The subsequent steps/conditions of burning to produce spherical iron oxide and further reduction to obtain the final spherical iron powder was performed as described in Example 1.

The average particle diameter of the obtained spherical iron oxide in this example was between 40 µm and 100 µm with an apparent density of 2.6 g/cc. The chemistry/composition of the obtained spherical iron oxide is provided in Table 4.

**Table 4: Chemical composition of spherical iron oxide produced after combustion**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron Oxide | 71.4 | 20.2 | 1.5 | 0.012 | 0.01 | 0.03 | 0.002 | 0.03 | 0.34 | 0.2 |

Further, the chemistry/composition of the obtained spherical iron powder in this example is provided in Table 5.

**Table 5: Chemical composition of spherical iron powder produced after reduction of spherical iron oxide**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron powder | 98.8 | 0.13 | 98.7 | 0.048 | 0.078 | 0.02 | 0.001 | 0.001 | 0.48 | 0.32 |

As observed from Table 5, the reduced spherical iron powder contained at least 98 wt% (i.e. about 98.7 wt%) metallic iron. Further, the spherical iron powder had an average particle diameter between 30 µm and 60 µm with an apparent density of 2.3 g/cc. Said results indicate the achievement of high purity spherical iron powder with finer particle size range by employing the present method.

### EXAMPLE 3: Production of spherical iron powder by employing irregular spray roasted iron oxide powder as a raw material and pure hydrogen gas as a reducing agent

Synthesis of spherical iron powder was carried out similar to the procedure described in Example 1. Here, the irregular spray roasted iron oxide powder having the composition as defined in Example 1 was reduced using pure hydrogen gas at about 700°C for a reduction time of about 60 minutes to produce irregular iron powder with an apparent density of 0.8 g/cm³. The subsequent steps/conditions of burning to produce spherical iron oxide remain the same as described in Example 1. The spherical iron oxide was then reduced in hydrogen rich gas

(cracked ammonia) in a reduction furnace at about 700°C for about 180 minutes duration. The resultant loosely sintered spherical iron powder cake was cooled in the furnace to room temperature by passing nitrogen gas. The sintered spherical iron powder cake was then crushed, pulverized and screened to produce spherical iron powder. The chemistry/compositions of the obtained spherical iron oxide and spherical iron powder of this example is provided in Tables 6 and 7, respectively.

**Table 6: Chemical composition of spherical iron oxide produced after combustion**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron Oxide | 71.6 | 23.5 | 1.6 | 0.014 | 0.01 | 0.034 | 0.004 | 0.04 | 0.415 | 0.201 |

The average particle diameter of the obtained spherical iron oxide in this example was between 80-200 µm with an apparent density of 2.5 g/cc.

**Table 7: Chemical composition of spherical iron powder produced after reduction of spherical iron oxide**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron powder | 98.9 | 0.13 | 98.8 | 0.039 | 0.049 | 0.02 | 0.003 | 0.001 | 0.475 | 0.217 |

The obtained spherical iron powder primarily contained metallic iron at about 98.8 wt % and possessed an average particle diameter between 60-100 µm with an apparent density of 2.1 g/cc. Said results indicate the achievement of high purity spherical iron powder with finer particle size range by employing the present method.

### EXAMPLE 4: Production of spherical iron powder by employing irregular spray roasted iron oxide powder as a raw material and coke breeze as a reducing agent

Synthesis of spherical iron powder was carried out similar to the procedure described in Example 1. Here, the irregular spray roasted iron oxide powder having the composition as defined in Example 1 was reduced using very fine carbonaceous coke breeze as reducing agent at reducing temperature of about 900°C for a reduction time of about 300 minutes to produce irregular iron powder with an apparent density of 1 g/cm³. The subsequent steps and rest all parameters to produce the final spherical iron powder remain the same as described in Example 3. The chemistry/compositions of the obtained spherical iron oxide and spherical iron powder of this example is provided in Tables 8 and 9, respectively.

**Table 8: Chemical composition of spherical iron oxide produced after combustion**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron Oxide | 70.3 | 18.2 | 1.3 | 0.014 | 0.9 | 0.032 | 0.003 | 0.04 | 0.28 | 0.54 |

The average particle diameter of the obtained spherical iron oxide was between 70-180 µm with an apparent density of 2.8 g/cc.

**Table 9: Chemical composition of spherical iron powder produced after reduction of spherical iron oxide**

| Composition (wt %) | Fe (total) | FeO | Fe (metal) | CaO | SiO₂ | C | S | MgO | MnO | Al₂O₃ |
|---|---|---|---|---|---|---|---|---|---|---|
| Spherical Iron powder | 98.04 | 0.04 | 98 | 0.039 | 0.97 | 0.03 | 0.004 | 0.001 | 0.3 | 0.56 |

The spherical iron powder primarily contained metallic iron at about 98 wt % with very few impurities and possessed an average particle diameter between 30-80 µm and an apparent density of 2.25 g/cc. Said results indicate the achievement of high purity spherical iron powder with finer particle size range by employing the present method.

The present disclosure is thus successful in providing a simple, cost-effective, non-toxic and efficient method of producing highly pure iron powder of fine particle size range. Said iron powder with high purity is immensely useful and can be employed in different industries, including powder metallurgy, diamond tools, welding and chemical industry. Highly pure iron powder especially finds applications in porous electrodes, metal injection molding (MIM), water treatment, food agriculture, catalyst, electromagnetic and metal fuel applications.

## Claims

1. A method for producing spherical iron powder, comprising steps of:
(a) heating the iron oxide in a reduction furnace to a temperature of about 500°C to 1200°C and reducing the iron oxide in presence of a carbon monoxide rich gas or a hydrogen rich gas or a solid carbonaceous reducing agent or any combination thereof, for a time-period of about 60 minutes to 360 minutes to form a loosely sintered iron powder cake,
(b) cooling the loosely sintered iron powder cake in the furnace to room temperature under inert atmosphere, followed by crushing, pulverizing and screening said iron powder cake to obtain the irregular iron powder,
(c) burning the irregular iron powder in the presence of oxygen rich gas to generate exothermic heat to melt and convert the irregular iron particles of the irregular iron powder into the spherical iron oxide powder due to surface tension,
(d) heating the spherical iron oxide powder in a reduction furnace to a temperature of about 500°C to 1200°C and reducing the spherical iron oxide powder in presence of a hydrogen rich gas, for a time-period of about 60 minutes to 300 minutes to form loosely sintered spherical iron powder cake, and
(e) cooling the loosely sintered spherical iron powder cake in the furnace to room temperature under inert atmosphere, followed by crushing, pulverizing and screening said spherical iron powder cake to obtain the spherical iron powder.

2. The method of claim 1, wherein the iron oxide employed for reduction to obtain the irregular iron powder is a spray roasted iron oxide powder.

3. The method of claim 1 or claim 2, wherein the spray roasted iron oxide comprises total iron Fe(t) at a wt% of about 69.09, FeO at a wt% of about 0.26, SiO₂ at a wt% of about 0.08, CaO at a wt% of about 0.01, MgO at a wt% of about 0.027, MnO at a wt% of about 0.38, Al₂O₃ at a wt% of about 0.16, S at a wt% of about 0.01, C at a wt% of about 0.123, along with at least one or more additional elements or components selected from Cr, Ti, Cu and P at various wt% to make up the final composition to 100 wt%.

4. The method of claim 1, wherein the carbon monoxide rich gas is selected from a group comprising coke oven gas, blast furnace gas, steel making converter gas, pure carbon monoxide and combinations thereof;
wherein the hydrogen rich gas is selected from a group comprising cracked ammonia, hydrogen separated from coke oven gas, pure hydrogen and combinations thereof.

5. The method of claim 1, wherein the solid carbonaceous reducing agent is selected from a group comprising carbon black, anthracite coal, coal tar pitch, coke breeze and combinations thereof;
wherein the oxygen rich gas is selected from a group comprising pure oxygen, air, a mixture of oxygen and fuel gas, and combinations thereof; and wherein the mixture of oxygen and fuel gas is selected from a group comprising oxygen and acetylene, oxygen and propane, oxygen and butene, and combinations thereof.

6. The method of claim 1, wherein the burning of the irregular iron powder is carried out using a powder dispensing unit and gas-powder burning torch; and wherein the burning of the irregular iron powder generates exothermic heat which melts and converts the irregular iron particles of the irregular iron powder into the spherical iron oxide particles due to surface tension.

7. The method of claim 1, wherein the method further comprises additional steps of cooling, crushing, pulverizing and screening to obtain the irregular iron powder or the spherical iron powder.

8. The method of claim 1, wherein the obtained spherical iron oxide comprises a dense spherical morphology of iron oxide particles having an average particle diameter between 10 µm to 200 µm and an apparent density between 2.5 g/cc to 3 g/cc;
wherein the obtained spherical iron powder has at least 98% metallic iron [Fe(m)] and comprises a dense spherical morphology of iron particles having an average particle diameter between 5 µm and 100 µm and an apparent density of 2.1 g/cc to 2.6 g/cc.

## Patentansprüche

1. Verfahren zum Herstellen von kugelförmigem Eisenpulver, umfassend die Schritte:
(a) Erhitzen des Eisenoxids in einem Reduktionsofen auf eine Temperatur von etwa 500 °C bis 1200 °C und Reduzieren des Eisenoxids in Gegenwart eines kohlenmonoxidreichen Gases oder eines wasserstoffreichen Gases oder eines festen, kohlenstoffhaltigen Reduktionsmittels oder jeglicher Kombination davon über einen Zeitraum von etwa 60 Minuten bis 360 Minuten, um einen locker gesinterten Eisenpulverkuchen zu bilden,
(b) Kühlen des locker gesinterten Eisenpulverkuchens im Ofen auf Raumtemperatur unter inerter Atmosphäre, gefolgt von Zerkleinern, staubfein Vermahlen und Sieben des Eisenpulverkuchens, um das unregelmäßige Eisenpulver zu erhalten,
(c) Verbrennen des unregelmäßigen Eisenpulvers in Gegenwart von sauerstoffreichem Gas, um exotherme Wärme zu erzeugen, um die unregelmäßigen Eisenpartikel des unregelmäßigen Eisenpulvers aufzuschmelzen und aufgrund von Oberflächenspannung in kugelförmiges Eisenoxidpulver umzuwandeln,
(d) Erhitzen des kugelförmigen Eisenoxidpulvers in einem Reduktionsofen auf eine Temperatur von etwa 500 °C bis 1200 °C und Reduzieren des kugelförmigen Eisenoxidpulvers in Gegenwart eines wasserstoffreichen Gases über einen Zeitraum von etwa 60 Minuten bis 300 Minuten, um einen locker gesinterten Kuchen aus kugelförmigem Eisenpulver zu bilden, und
(e) Kühlen des locker gesinterten Kuchens aus kugelförmigem Eisenpulver im Ofen auf Raumtemperatur unter inerter Atmosphäre, gefolgt von Zerkleinern, staubfein Vermahlen und Sieben des Kuchens aus kugelförmigem Eisenpulver, um das kugelförmige Eisenpulver zu erhalten.

2. Verfahren nach Anspruch 1, wobei das Eisenoxid, das zur Reduktion zum Erhalten von unregelmäßigem Eisenpulver verwendet wird, ein sprühgeröstetes Eisenoxidpulver ist.

3. Verfahren nach Anspruch 1 oder Anspruch 2, wobei das sprühgeröstete Eisenoxid etwa 69,09 Gew.-% Gesamteisen Fe(t), etwa 0,26 Gew.-% FeO, etwa 0,08 Gew.-% SiO₂, etwa 0,01 Gew.-% CaO, etwa 0,027 Gew.-% MgO, etwa 0,38 Gew.-% MnO, etwa 0,16 Gew.-% Al₂O₃, etwa 0,01 Gew.-% S, etwa 0,123 Gew.-% C, zusammen mit mindestens einem oder mehreren zusätzlichen Elementen oder Komponenten, die aus Cr, Ti, Cu und P ausgewählt sind, in verschiedenen Gew.-% für eine Endzusammensetzung von 100 Gew.-% umfassen.

4. Verfahren nach Anspruch 1, wobei das kohlenmonoxidreiche Gas aus einer Gruppe ausgewählt ist, die Kokereigas, Hochofengas, Konvertergas der Stahlherstellung, reines Kohlenmonoxid und Kombinationen davon umfasst;
wobei das wasserstoffreiche Gas aus einer Gruppe ausgewählt ist, die gecracktes Ammoniak, von Kokereigas abgetrennten Wasserstoff, reinen Wasserstoff und Kombinationen davon umfasst.

5. Verfahren nach Anspruch 1, wobei das feste, kohlenstoffhaltige Reduktionsmittel aus einer Gruppe ausgewählt ist, die Ruß, Steinkohle, Steinkohlenteerpech, Koksgrus und Kombinationen davon umfasst;
wobei das sauerstoffreiche Gas aus einer Gruppe ausgewählt ist, die reinen Sauerstoff, Luft, eine Mischung aus Sauerstoff und Brenngas und Kombinationen davon umfasst; und wobei die Mischung aus Sauerstoff und Brenngas aus einer Gruppe ausgewählt ist, die Sauerstoff und Acetylen, Sauerstoff und Propan, Sauerstoff und Buten und Kombinationen davon umfasst.

6. Verfahren nach Anspruch 1, wobei das Verbrennen des unregelmäßigen Eisenpulvers unter Verwendung einer Pulverdosiereinheit und eines Gas-Pulver-Brenners durchgeführt wird; und wobei das Verbrennen des unregelmäßigen Eisenpulvers exotherme Wärme erzeugt, die die unregelmäßigen Eisenpartikel des unregelmäßigen Eisenpulvers aufschmilzt und aufgrund der Oberflächenspannung in die kugelförmigen Eisenoxidpartikel umwandelt.

7. Verfahren nach Anspruch 1, wobei das Verfahren ferner zusätzliche Schritte des Kühlens, Zerkleinerns, staubfein Vermahlens und Siebens umfasst, um das unregelmäßige Eisenpulver oder das kugelförmige Eisenpulver zu erhalten.

8. Verfahren nach Anspruch 1, wobei das erhaltene kugelförmige Eisenoxid eine dichte kugelförmige Morphologie von Eisenoxidpartikeln umfasst, die einen mittleren Partikeldurchmesser zwischen 10 µm bis 200 µm und eine Schüttdichte zwischen 2,5 g/cm³ bis 3 g/cm³ aufweisen;
wobei das erhaltene kugelförmige Eisenpulver mindestens 98 % metallisches Eisen [Fe(m)] aufweist und eine dichte kugelförmige Morphologie von Eisenpartikeln umfasst, die einen mittleren Partikeldurchmesser zwischen 5 µm bis 100 µm und eine Schüttdichte zwischen 2,1 g/cm³ bis 2,6 g/cm³ aufweisen.

## Revendications

1. Procédé de production de poudre de fer sphérique, comprenant les étapes consistant à :
(a) chauffer l'oxyde de fer dans un four de réduction à une température d'environ 500 °C à 1 200 °C et réduire l'oxyde de fer en présence d'un gaz riche en monoxyde de carbone ou d'un gaz riche en hydrogène ou d'un agent réducteur carboné solide ou de toute combinaison de ceux-ci, pendant une période de temps d'environ 60 minutes à 360 minutes pour former un gâteau de poudre de fer fritté de manière lâche,
(b) refroidir le gâteau de poudre de fer fritté de manière lâche dans le four jusqu'à la température ambiante sous atmosphère inerte, puis broyer, pulvériser et cribler ledit gâteau de poudre de fer afin d'obtenir la poudre de fer irrégulière,
(c) brûler la poudre de fer irrégulière en présence d'un gaz riche en oxygène afin de générer une chaleur exothermique pour faire fondre et convertir les particules de fer irrégulières de la poudre de fer irrégulière en la poudre d'oxyde de fer sphérique en raison de la tension superficielle,
(d) chauffer la poudre d'oxyde de fer sphérique dans un four de réduction jusqu'à une température d'environ 500 °C à 1 200 °C et réduire la poudre d'oxyde de fer sphérique en présence d'un gaz riche en hydrogène, pendant une période de temps d'environ 60 minutes à 300 minutes pour former un gâteau de poudre de fer sphérique fritté de manière lâche, et
(e) refroidir le gâteau de poudre de fer sphérique fritté de manière lâche dans le four jusqu'à la température ambiante sous atmosphère inerte, puis broyer, pulvériser et cribler ledit gâteau de poudre de fer sphérique afin d'obtenir la poudre de fer sphérique.

2. Procédé selon la revendication 1, dans lequel l'oxyde de fer employé pour la réduction afin d'obtenir la poudre de fer irrégulière est une poudre d'oxyde de fer grillée par pulvérisation.

3. Procédé selon la revendication 1 ou la revendication 2, dans lequel l'oxyde de fer grillé par pulvérisation comprend du fer total Fe(t) à un % en poids d'environ 69,09, FeO à un % en poids d'environ 0,26, SiO₂ à un % en poids d'environ 0,08, CaO à un % en poids d'environ 0,01, MgO à un % en poids d'environ 0,027, MnO à un % en poids d'environ 0,38, Al₂O₃ à un % en poids d'environ 0,16, S à un % en poids d'environ 0,01, C à un % en poids d'environ 0,123, ainsi qu'au moins un ou plusieurs éléments ou composants supplémentaires choisis parmi Cr, Ti, Cu et P à divers % en poids afin de compléter la composition finale à 100 % en poids.

4. Procédé selon la revendication 1, dans lequel le gaz riche en monoxyde de carbone est choisi dans un groupe comprenant le gaz de cokerie, le gaz de haut-fourneau, le gaz de convertisseur d'aciérie, le monoxyde de carbone pur et des combinaisons de ceux-ci ;
dans lequel le gaz riche en hydrogène est choisi dans un groupe comprenant l'ammoniac craqué, l'hydrogène séparé du gaz de cokerie, l'hydrogène pur et des combinaisons de ceux-ci.

5. Procédé selon la revendication 1, dans lequel l'agent réducteur carboné solide est choisi dans un groupe comprenant le noir de carbone, le charbon anthracite, le brai de goudron de houille, le poussier de coke et des combinaisons de ceux-ci ;
dans lequel le gaz riche en oxygène est choisi dans un groupe comprenant l'oxygène pur, l'air, un mélange d'oxygène et de gaz combustible, et des combinaisons de ceux-ci ; et dans lequel le mélange d'oxygène et de gaz combustible est choisi dans un groupe comprenant l'oxygène et l'acétylène, l'oxygène et le propane, l'oxygène et le butène, et des combinaisons de ceux-ci.

6. Procédé selon la revendication 1, dans lequel la combustion de la poudre de fer irrégulière est effectuée à l'aide d'une unité de distribution de poudre et d'une torche de combustion gaz-poudre ; et dans lequel la combustion de la poudre de fer irrégulière génère une chaleur exothermique qui fait fondre et convertit les particules de fer irrégulières de la poudre de fer irrégulière en particules d'oxyde de fer sphériques en raison de la tension superficielle.

7. Procédé selon la revendication 1, dans lequel le procédé comprend en outre des étapes supplémentaires de refroidissement, de broyage, de pulvérisation et de criblage pour obtenir la poudre de fer irrégulière ou la poudre de fer sphérique.

8. Procédé selon la revendication 1, dans lequel l'oxyde de fer sphérique obtenu comprend une morphologie sphérique dense de particules d'oxyde de fer ayant un diamètre moyen de particules compris entre 10 µm et 200 µm et une densité apparente comprise entre 2,5 g/cm³ et 3 g/cm³ ;
dans lequel la poudre de fer sphérique obtenue contient au moins 98 % de fer métallique [Fe(m)] et comprend une morphologie sphérique dense de particules de fer ayant un diamètre moyen de particules compris entre 5 µm et 100 µm et une densité apparente de 2,1 g/cm³ à 2,6 g/cm³.
